(19)

Europäisches
Patentamt
European
Patent Office
Office européen
des brevets

(11) **EP 2 687 828 A1**

(12) **EUROPEAN PATENT APPLICATION**

(43) Date of publication:
**22.01.2014 Bulletin 2014/04**

(51) Int Cl.:
***G01F 1/66*** (2006.01)

(21) Application number: **13176806.1**

(22) Date of filing: **17.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.07.2012 US 201213552208**

(71) Applicant: **General Electric Company**
**Schenectady, New York 12345 (US)**

(72) Inventors:
• **Ao, Xiaolei Shirley**
**Billerica, MA Massachusetts 01821 (US)**

• **Ma, Yue**
**Billerica, MA Massachusetts 01821 (US)**
• **LiDoria, Shawn**
**Billerica, MA Massachusetts 01821 (US)**

(74) Representative: **Picker, Madeline Margaret**
**GPO Europe**
**GE International Inc.**
**The Ark**
**201 Talgarth Road**
**Hammersmith**
**London W6 8BJ (GB)**

(54) **Ultrasonic wedge and method for determining the speed of sound in same**

(57)    A wedge (110) and a method for determining the speed of sound in the wedge is disclosed. The wedge (110) includes a reflecting wall (120) and is configured such that a portion of the main ultrasonic signal transmitted by an ultrasonic transducer (130) is reflected and travels through the wedge (110) back to the ultrasonic transducer (130). The speed of sound can be determined based on the distance traveled by, and the time of flight of, the main ultrasonic signal and reflected ultrasonic signal in the wedge (110).

FIG. 2

EP 2 687 828 A1

**Description**

This invention relates generally to ultrasonic flow rate measurement, and more particularly to an externally clamped on ultrasonic wedge and a method for determining the speed of sound in the ultrasonic wedge.

Ultrasonic flow meters are used to determine the flow rate of a variety of fluids (e.g., liquids, gases, etc.) flowing in pipes or other test objects. In one type of ultrasonic flow meter employing transit time flow metering, a pair of ultrasonic transducers is attached to the exterior of the pipe wall, with the ultrasonic transducers located upstream and downstream from each other, forming an ultrasonic path between them. Each ultrasonic transducer transmits an ultrasonic signal (e.g., a sound wave) along an ultrasonic path through the fluid flowing in the pipe that is received by and detected by the other ultrasonic transducer. The velocity of the fluid along the ultrasonic path can be determined as a function of the difference between (i) the transit time of an ultrasonic signal traveling along the ultrasonic path from the downstream ultrasonic transducer upstream to the upstream ultrasonic transducer against the flow direction, and (2) the transit time of an ultrasonic signal traveling along the ultrasonic path from the upstream ultrasonic transducer downstream to the downstream ultrasonic transducer with the flow direction.

In some ultrasonic flow rate measurement applications, ultrasonic transducers are mounted to ultrasonic wedges, which are clamped onto the pipe wall. To measure the flow rate of the fluid, in one example, the total time of flight between the pair of ultrasonic transducers is measured, which includes the time of flight through the ultrasonic wedges, the pipe walls, and the fluid. To determine the time of flight through the fluid, the time of flight through the pipe wall and the ultrasonic wedge must also be determined and then subtracted from the total time of flight, requiring knowledge of the speed of sound in the pipe wall and in the ultrasonic wedge.

While the speed of sound in the pipe wall, typically made of stainless steel, is relatively temperature independent (i.e., the speed of sound does not change significantly as the temperature of the pipe wall changes), the speed of sound in the plastic materials typically used in ultrasonic wedges is temperature dependent since the speed of sound in those plastics is strongly dependent on the bulk temperature of the plastic. For example, the speed of sound in a plastic ultrasonic wedge is slower when the temperature of the plastic ultrasonic wedge is higher.

The differing speeds of sound caused by the temperature dependence of the plastic ultrasonic wedge results in inaccurate time of flight measurements and flow rate errors if not corrected. For example, the measured total time of flight will be longer when the ultrasonic wedge's temperature is higher (e.g., during the day outdoors in the desert or when the fluid is flowing at a high temperature raising the temperature of the ultrasonic wedge) than the time of flight measured when the same ultrasonic wedge's temperature is lower (e.g., during the night outdoors in the desert or when the fluid is flowing at a low temperature lowering the temperature of the ultrasonic wedge). This will produce different measured flow rates even though the fluid is actually traveling at the same flow rate for both measurements.

To account for temperature variation in the ultrasonic wedge, the ultrasonic wedges for some ultrasonic transducers include an inserted temperature probe to measure the temperature of the ultrasonic wedge and determine the speed of sound based on that measured temperature (e.g., using a look up table). While this temperature probe improves the accuracy of the time of flight measurements, it increases the cost and complexity of the ultrasonic transducer. In addition, the temperature probe only provides the temperature at a single point of the ultrasonic wedge, which can provide erroneous time of flight corrections.

In other ultrasonic transducers, an elongated acoustic coupler is used to couple an ultrasonic signal from an ultrasonic transducer and the pipe wall, where the acoustic coupler includes a slot off of the main ultrasonic path, typically as wide as at least one wavelength. This slot is designed to create an echo allowing the time of flight through the acoustic coupler to be determined to correct for speed of sound variation. Since this slot is required to be as wide as one wavelength (e.g., 4 mm to 6 mm) wide for lower ultrasonic frequency signals (e.g., 500 kHz), the slot can negatively impact the main ultrasonic signal traveling on the main ultrasonic path and lead to inaccurate time of flight measurements.

The discussion above is merely provided for general background information and is not intended to be used as an aid in determining the scope of the claimed subject matter.

A wedge and a method for determining the speed of sound in the ultrasonic wedge is disclosed. The ultrasonic wedge includes a reflecting wall and is configured such that a portion of the main ultrasonic signal transmitted by an ultrasonic transducer is reflected and travels through the ultrasonic wedge back to the ultrasonic transducer. The speed of sound can be determined based on the distance traveled by, and the time of flight of, the main ultrasonic signal and reflected ultrasonic signal in the ultrasonic wedge. An advantage that may be realized in the practice of some disclosed embodiments of the ultrasonic wedge is that inaccurate time of flight measurements caused by variation in the speed of sound in the ultrasonic wedge caused by temperature variations can be corrected leading to more accurate flow rate measurements.

In one embodiment, a wedge for coupling an ultrasonic signal from an ultrasonic transducer to a test object is disclosed. The wedge comprises a test object interface wall configured for coupling the ultrasonic signal to the test object, a first plane extending normal to the test object interface wall, a transducer interface wall configured for mounting the ultrasonic transducer to the wedge, the transducer interface wall is oriented such that a main ultrasonic signal transmitted from the ultrasonic transducer would form a first angle relative to the first plane and reflect a portion of the main ultrasonic signal at a reflected angle relative to the first plane, wherein the first angle is equal to the reflected angle, and a reflecting wall oriented such that a second plane normal to the reflecting wall forms a second angle with the first plane, wherein the second angle is equal to the first angle, and wherein the reflected ultrasonic signal would be perpendicular to the reflecting wall.

In another embodiment, the wedge comprises a top wall, and a first side wall, wherein the first end of the transducer interface wall is proximate to the first end of the test object interface wall, the second end of the transducer interface wall is proximate to the first end of the top wall, the second end of the top wall is proximate to the first end of the reflecting wall, the second end of the reflecting wall is proximate to the first end of the side wall, and the second end of the side wall is proximate to the second end of the test object interface wall.

In yet another embodiment, a method for determining the speed of sound in a wedge coupled to a test object is disclosed. The method comprises the steps of transmitting a main ultrasonic signal from an ultrasonic transducer into the wedge, reflecting a portion of the main ultrasonic signal back through the wedge to the ultrasonic transducer, measuring a time of flight of the main ultrasonic signal and the reflected ultrasonic signal in the wedge, and determining the speed of sound of the wedge based on the time of flight and the distance traveled by the main ultrasonic signal and the reflected ultrasonic signal in the wedge.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:

FIG. 1 illustrates an exemplary ultrasonic flow meter, partly in section, installed on a pipe employing transit time flow metering to determine the flow rate of a fluid;

FIG. 2 is an enlarged view of a portion of the exemplary ultrasonic flow meter of FIG. 1 showing an exemplary ultrasonic wedge coupled to a pipe; and

FIG. 3 is a flow diagram of an exemplary method for determining the speed of sound in an ultrasonic wedge.

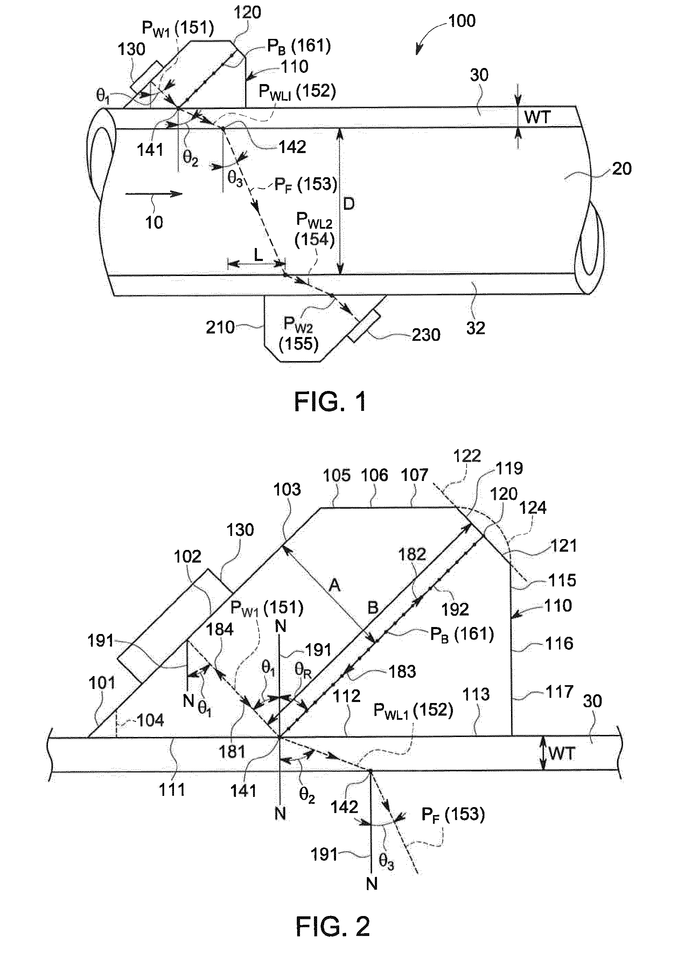

FIG. 1 illustrates an exemplary ultrasonic flow meter 100 installed on a pipe 20 employing transit time flow metering to determine the flow rate of a fluid. FIG. 2 is an enlarged view of a portion of the exemplary ultrasonic flow meter 100 of FIG. 1 showing an exemplary upstream ultrasonic wedge 110 coupled to a pipe 20. Although the exemplary ultrasonic flow meter 100 is used for measuring flow rate of fluids flowing in a pipe 20, it will be understood that other test objects can be used. Based on the flow direction 10, a first ultrasonic transducer 130 can be installed upstream of the second ultrasonic transducer 230 on the pipe 20. The main ultrasonic path 153 through the fluid can be through the central axis of the pipe 20 or on chordal paths (i.e., path not through the central axis of the pipe 20). Each ultrasonic transducer 130, 230 transmits an ultrasonic signal through the flowing fluid that is received by and detected by the other ultrasonic transducer 230, 130.

For simplicity, FIGS. 1 and 2 only show the transmission of an ultrasonic signal from the first ultrasonic transducer 130 to the second ultrasonic transducer 230 on a single path in one direction, although, in a typical ultrasonic flow meter, there would also be transmission of an ultrasonic signal from the second ultrasonic transducer 230 to the first ultrasonic transducer 130 or along multiple paths. Also, in another embodiment, not shown, the ultrasonic transducers 130, 230 can be located on the same side of the pipe 20 with the ultrasonic signal reflected off of the opposite side of the pipe 20. Although FIG. 1 shows a single pair of ultrasonic transducers 130, 230 forming a single main ultrasonic path 153, it will be understood by a person of ordinary skill in the art that two or more pairs of ultrasonic transducers, each forming separate ultrasonic paths, can be used to form a multi-path ultrasonic flow meter. Also, although the pair of ultrasonic transducers 130, 230 are shown as angle beam ultrasonic transducers clamped onto the pipe 20, it will be understood that other ultrasonic transducers in other configurations can be used.

The path velocity $(V_p)$ of the fluid averaged along a main ultrasonic path 153 through the fluid can be determined as a function of the differential between the upstream transit time $(t_{up})$ (i.e., the time of an ultrasonic signal traveling along the main ultrasonic path 153 through the fluid from the second ultrasonic transducer 230 upstream to the first ultrasonic transducer 130 against the flow direction 10) and the downstream transit time $(t_{dn})$ (i.e., the time of an ultrasonic signal traveling along the main ultrasonic path 153 through the fluid from the first ultrasonic transducer 130 downstream to the second ultrasonic transducer 230 with the flow direction 10) of the ultrasonic signals. In the presence of fluid flowing, the downstream transit time $(t_{dn})$ traveling with the flow direction 10 is faster (or shorter) than the upstream transit time $(t_{up})$ traveling against the flow direction 10.

Since the transit time differential $(\Delta t)$ is proportional to the path velocity $(V_p)$ of the fluid, the path velocity $(V_p)$ of the fluid averaged along the main ultrasonic path 153 through the fluid can be determined as a function of the transit time differential $(\Delta t)$ as well as other known parameters, such as the pipe 20 inner diameter (D), ultrasonic path length $(P_F)$ through the fluid, the angle $(\theta_3)$ formed between the main ultrasonic path 153 through the fluid and a first plane 191 normal (N) to the test object interface (bottom) wall 112 of the upstream ultrasonic wedge 110, and the projection (L) of the path length $(P_F)$ along the pipe axis as shown in FIGS. 1 and 2:

$$V_p = \frac{P_F}{2}\left(\frac{t_{up} - t_{dn}}{(t_{dn} \times t_{up})\cos\theta_3}\right) \tag{1}$$

$$\cos\theta_3 = \frac{L}{P_F} \tag{2}$$

$$V_p = \frac{P_F^2}{2L}\left(\frac{t_{up} - t_{dn}}{t_{dn} \times t_{up}}\right) \tag{3}$$

The main ultrasonic signal generated by the first ultrasonic transducer 130 forms a first main ultrasonic path $(P_{W1})$ 151 of a length (A) through an upstream ultrasonic wedge 110 and a second main ultrasonic path $(P_{WL1})$ 152 through the upper pipe wall 30 having a wall thickness (WT) before forming the third main ultrasonic path $(P_F)$ 153 through the fluid. Similarly, after passing through the fluid, the main ultrasonic signal generated by the first ultrasonic transducer 130 forms a fourth main ultrasonic path $(P_{WL2})$ 154 through the lower pipe wall 32 having a wall thickness (WT) and a main ultrasonic path $(P_{W2})$ 155 through a downstream ultrasonic wedge 210 before being received by the second ultrasonic transducer 230.

In one embodiment, the ultrasonic wedges 110, 210 are made of a plastic (e.g., polyetherimide (ULTEM), polyamide-imide (TORLON), polyimide (VESPEL), polyetheretherketone (PEEK)) that has a speed of sound that is temperature dependent. For example, the speed of sound of the plastic aterial could decrease approximately 0.5 to 1.0 m/s for every increase in temperature of 1 °C such that a 10°C increase in temperature based on seasonal or daily temperature changes for an outdoor ultrasonic flow meter could result in a decrease of 5.0 to 10.0 m/s in the speed of sound through the ultrasonic wedge 110.

As shown in FIGS. 1 and 2, in one embodiment, the main ultrasonic signal from the first ultrasonic transducer 130 passing through the upstream ultrasonic wedge 110 refracts into the upper pipe wall 30 at a first interface 141 of the upstream ultrasonic wedge 110 and the upper pipe wall 30. Similarly, the main ultrasonic signal passing through the upper pipe wall 30 refracts into the fluid at a second interface 142 of the upper pipe wall 30 and the fluid. As the main ultrasonic signal passes through an interface of two different materials, its angle and speed changes based on angles of incidence, angles of refraction, and the speed of sound of the materials of the objects in a relationship given by Snell's law:

$$\frac{c_1}{\sin\theta_1} = \frac{c_2}{\sin\theta_2} = \frac{c_3}{\sin\theta_3} \qquad\qquad (4)$$

where

$c_1$ = speed of sound in the upstream ultrasonic wedge 110;

$c_2$ = speed of sound in the upper pipe wall 30;

$c_3$ = speed of sound in the fluid;

$\theta_1$ = first angle formed between the first main ultrasonic path ($P_{W1}$) 151 through the upstream ultrasonic wedge 110 and a first plane 191 normal (N) to the test object interface (bottom) wall 112 of the upstream ultrasonic wedge 110;

$\theta_2$ = second angle formed at the first interface 141 between the second main ultrasonic path ($P_{WL1}$) 152 through the upper pipe wall 30 and a first plane 191 normal (N) to the test object interface (bottom) wall 112 of the upstream ultrasonic wedge 110; and

$\theta_3$ = third angle formed at the second interface 142 between the third main ultrasonic path ($P_F$) 153 through the fluid and a first plane 191 normal (N) to the test object interface (bottom) wall 112 of the upstream ultrasonic wedge 110.

As can be seen in FIG. 1, the total time of flight ($T_{TOTAL}$) from the first ultrasonic transducer 130 to the second ultrasonic transducer 230 can be determined by the following equation:

$$T_{TOTAL} = T_{W1} + T_{WL1} + T_F + T_{WL2} + T_{W2} \qquad\qquad (5)$$

Where

$T_{W1}$ = time of flight through the upstream ultrasonic wedge 110;

$T_{WL1}$ = time of flight through the upper pipe wall 30;

$T_F$ = time of flight through the fluid;

$T_{WL2}$ = time of flight through the lower pipe wall 32; and

$T_{W2}$ = time of flight through the downstream ultrasonic wedge 210.

As per equation (5), to determine the time of flight through the fluid ($T_F$), the ultrasonic flow meter 100 can measure the total time of flight ($T_{TOTAL}$) and then subtract the calculated times of flight through the ultrasonic wedges 110, 210 ($T_{W1}$, $T_{W2}$) and through the pipe walls 30, 32 ($T_{WL1}$, $T_{WL2}$). Assuming that the time of flight through the upstream ultrasonic wedge 110 is equal to the time of flight through the downstream ultrasonic wedge 210 ($T_{W1} = T_{W2}$) and that the time of flight through the upper pipe wall 30 is the same as the time of flight through the lower pipe wall 32 ($T_{WL1} = T_{WL2}$):

$$T_F = T_{TOTAL} - (2 * T_{W1} + 2 * T_{WL1}) \qquad\qquad (6)$$

Equations (5) and (6) demonstrate that an accurate determination the time of flight through the fluid ($T_F$) requires an accurate calculation for the times of flight through the ultrasonic wedges 110, 210 ($T_{W1}$, $T_{W2}$), which requires accurate knowledge of the speed of sound ($c_1$) through the ultrasonic wedges 110, 210. If the speed of sound assumed for the ultrasonic wedges 110, 210 is incorrect (e.g., if the speed of sound is different than the rated speed of sound based on the temperature of the ultrasonic wedges 110, 210), then the time of flight through the fluid ($T_F$) and related flow rate determination will be inaccurate. For example, if the measured total the total time of flight ($T_{TOTAL}$) increases because the actual time of flight through the higher temperature ultrasonic wedge 110, 210 was longer that calculated, and no correction is made to the rated speed of sound of the ultrasonic wedges 110. 210 used to calculate the times of flight through the ultrasonic wedges 110, 210 ($T_{W1}$, $T_{W2}$), the ultrasonic flow meter 100 will incorrectly determine that the time of flight through the fluid ($T_F$) has also increased resulting in an inaccurate flow rate.

To illustrate the correction of the speed of sound required for the temperature dependence of a plastic ultrasonic wedge, assume the following parameters are known or measured:

A = path length through the upstream ultrasonic wedge 110 = 20 mm;

B = reflected path length (B) through the upstream ultrasonic wedge = 40 mm;

WT = wall thickness of the upper and lower pipe walls 30, 32 = 3.9 mm;

D = inner diameter of the pipe 20 = 52 mm;

$c_1$ = rated speed of sound in the upstream ultrasonic wedge 110 = 2,400 m/s at 25°C;

$c_2$ = speed of sound in the upper pipe wall 30 = 3,230 m/s at 25°C;

$\theta_1$ = first angle = 42°; and

$T_{TOTAL}$ = 61.25 μs.

The time of flight through the upstream ultrasonic wedge 110 ($T_{W1}$) can be determined as a function of the speed of sound ($c_1$) in the upstream ultrasonic wedge 110:

$$T_{W1} = \frac{P_{w1}}{c_1} = \frac{A}{c_1} = 8.33us \tag{7}$$

Based on equation (4), $\theta_2$ can also be determined as a function of the speed of sound ($c_1$,) in the upstream ultrasonic wedge 110:

$$\theta_2 = \sin^{-1}(\frac{c_2}{c_1} * \sin\theta_1) = 64.23^\circ \tag{8}$$

The time of flight through the upper pipe wall ($T_{WL1}$) can be calculated as a function of $\theta_2$, which was determined as a function of the speed of sound ($c_1$,) in the upstream ultrasonic wedge 110:

$$T_{WL1'} = \frac{P_{WL1}}{c_2} = \frac{\frac{WT}{\cos(\theta_2)}}{c_2} = 2.78us \tag{9}$$

Using equation (6), the time of flight for the fluid ($T_F$) can be calculated as:

$$T_F = T_{TOTAL} - (2 * T_{W1} + 2 * T_{WL1}) = 38.8us \tag{10}$$

Using equation (4), the ratio of the speed of sound in the fluid (c3) to $\theta_3$ can be calculated as:

$$\frac{c_1}{\sin\theta_1} = \frac{c_2}{\sin\theta_2} == \frac{c_3}{\sin\theta_3} = 3586.7 \tag{11}$$

The results of equations (10) and (11) allow iteration to determine the values for $c_3$ and $\theta_3$, which are then used in equations (1) to (3) to calculate the path velocity ($V_p$) of the fluid:

$c_3$ = speed of sound in the fluid = 1,469 m/s; and

$\theta_3$ = third angle formed between the main ultrasonic path 153 through the fluid and a first plane 191 normal (N) to the test object interface (bottom) wall 112 of the upstream ultrasonic wedge 110 = 24.2°.

As illustrated in this example, if the assumed value of $c_1$, the rated speed of sound in the upstream ultrasonic wedge 110 is 2,400 m/s at 25°C, does not match the actual speed of sound in the upstream ultrasonic wedge 110 operating at a different temperature, then the calculation of the path velocity ($V_p$) of the fluid will be incorrect, since it will be based on incorrect values of, e.g., $T_{W1}$, c3, and $\theta_3$. Rather than rely upon the rated speed of sound in the upstream ultrasonic wedge 110, the inventive upstream ultrasonic wedge 110 allows for the real time determination of the speed of sound in the ultrasonic wedge. As shown in FIGS. 1 and 2 and as will be explained, the upstream ultrasonic wedge 110 includes a reflecting wall 120, 124 that allows $c_{1A}$, the actual speed of sound in the upstream ultrasonic wedge 110, to be determined.

In one embodiment, the upstream ultrasonic wedge 110 has a transducer interface wall 102 (having a first end 101 and a second end 103), a top wall 106 (having a first end 105 and a second end 107), the planar reflecting wall 120 (having a first end 119 and a second end 121), a side wall 116 (having a first end 115 and a second end 117), and a test object interface (bottom) wall 112 (having a first end 111 and a second end 113). The first end 101 of the transducer interface wall 102 is proximate to the first end 111 of the test object interface (bottom) wall 112. The second end 103 of the transducer interface wall 102 is proximate to the first end 105 of the top wall 106. The second end 107 of the top wall 106 is proximate to the first end 119 of the planar reflecting wall 120. The second end 121 of the planar reflecting wall 120 is proximate to the first end 115 of the side wall 116. The second end 117 of the side wall 116 is proximate to the second end 113 of the test object interface (bottom) wall 112. It will be understood that the upstream ultrasonic wedge 110 can have different configurations, including an additional side wall 104 located between the first end 101 of the transducer interface wall 102 and the first end 111 of the test object interface (bottom) wall 112. In addition, the test object interface (bottom) wall 112 can be part of a base structure for the upstream ultrasonic wedge 110.

In one embodiment, the first ultrasonic transducer 130 is mounted on the transducer interface wall 102 and transmits a main ultrasonic signal into the upstream ultrasonic wedge 110, wherein the main ultrasonic signal travels in a first direction 181 toward the test object interface (bottom) wall 112 on a first main ultrasonic path 151 ($P_{W1}$) of length A (e.g., 20 mm) through the upstream ultrasonic wedge 110. The transducer interface wall 102 is oriented such that the first main ultrasonic path 151 ($P_{W1}$) forms a first angle ($\theta_1$) with a first plane 191 normal (N) to the test object interface (bottom) wall 112. The test object interface (bottom) wall 112 is coupled to the upper pipe wall 30.

A portion (e.g., ten percent or less) of the main ultrasonic signal is reflected off of the test object interface (bottom) wall 112 of the upstream ultrasonic wedge 110. The reflected ultrasonic signal travels in a second direction 182 away from the test object interface (bottom) wall 112 on a reflected ultrasonic path 161 ($P_B$) of length B (e.g., 40 mm). The reflected ultrasonic path 161 ($P_B$) forms a reflected angle ($\theta_R$) with a first plane 191 normal (N) to the test object interface (bottom) wall 112, wherein the reflected angle ($\theta_R$) is equal to the first angle ($\theta_1$).

The reflected ultrasonic signal then reflects off of the planar reflecting wall 120 of the upstream ultrasonic wedge 110. The reflected ultrasonic signal travels in a third direction 183 toward the test object interface (bottom) wall 112 on the reflected ultrasonic path 161 ($P_B$) of length B, wherein the third direction 183 is opposite of the second direction 182. As shown in FIGS. 1 and 2, the planar reflecting wall 120 is located between the top wall 106 and the side wall 116 and forms a reflecting plane 122 that is perpendicular to the reflected ultrasonic path 161 ($P_B$). The planar reflecting wall 120 is oriented such that a second plane 192 normal (N) to the planar reflecting wall 120 forms a reflected angle ($\theta_R$) with the first plane 191 normal (N) to the test object interface (bottom) wall 112, wherein the reflected angle ($\theta_R$) is equal to the first angle ($\theta_1$).

In one embodiment, a conventional rectangular ultrasonic wedge can have its top corner removed or milled to form the planar reflecting wall 120. In an alternative embodiment as shown on FIG. 2, a curved reflecting wall 124 can be used to reflect an ultrasonic signal with an angular spread.

The reflected ultrasonic signal then reflects again off of the test object interface (bottom) wall 112 of the upstream ultrasonic wedge 110. The reflected ultrasonic signal travels in a fourth direction 184 away from the test object interface (bottom) wall 112 on the first main ultrasonic path 151 ($P_{W1}$) of length A, before returning to the first ultrasonic transducer 130, wherein the fourth direction 184 is opposite of the first direction 181.

The ultrasonic flow meter 100 can measure the total time of flight of the main ultrasonic signal through the upstream ultrasonic wedge 110 (e.g., $T_{CORR} = 50.21\mu s$) and determine the actual speed of sound ($c_{1A}$) in the upstream ultrasonic wedge 110 (which is slower than the rated speed of sound) by dividing the total distance traveled by the measured time of flight:

$$c_{1A} = \frac{(2*A + 2*B)}{T_{CORR}} = \frac{0.120m}{50.21\mu s} = 2,390 m/s \qquad (12)$$

The actual time of flight of the main ultrasonic signal through the upstream ultrasonic wedge 110 ($T_{W1A}$) (which is longer than the time of flight determined based on the rated speed of sound) can then be determined using the ratio of the lengths (A, B) of the ultrasonic paths:

$$T_{W1A} = \frac{A}{(2*A+2*B)} * T_{CORR} = 8.37 \mu s \qquad (13)$$

The shorter actual speed of sound ($c_{1A}$) and the longer actual time of flight ($T_{W1A}$) in the upstream ultrasonic wedge 110 at the current temperature can then be used to determine an accurate flow rate using equations (1) through (11) described above.

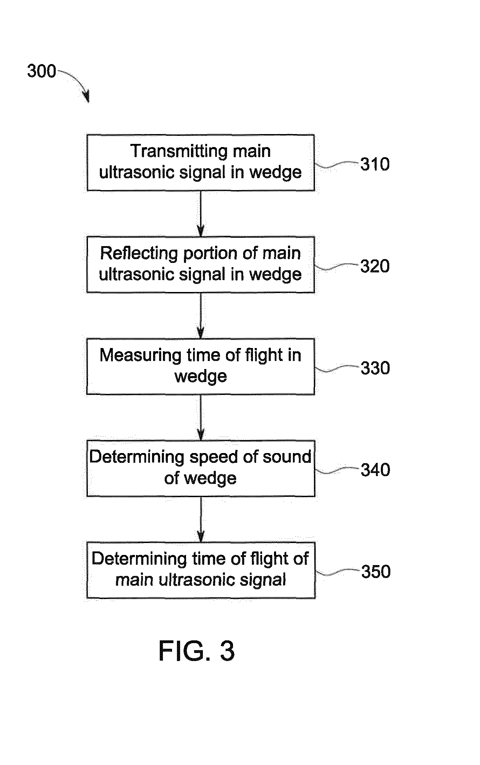

FIG. 3 is a flow diagram of the exemplary method 300 for determining the speed of sound in an ultrasonic wedge discussed above. At step 310, a main ultrasonic signal is transmitted from an ultrasonic transducer into the ultrasonic wedge. At step 320, a portion of the main ultrasonic signal is reflected back through the ultrasonic wedge to the ultrasonic transducer. At step 330, the time of flight of the main ultrasonic signal and the reflected ultrasonic signal in the ultrasonic wedge is measured. At step 340, the speed of sound of the ultrasonic wedge is determined based on the time of flight and the distance traveled by the main ultrasonic signal and the reflected ultrasonic signal in the ultrasonic wedge. At step 350, the time of flight of the main ultrasonic signal in the ultrasonic wedge is determined based on the speed of sound of the ultrasonic wedge and the distance traveled by the main ultrasonic signal in the ultrasonic wedge.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:

1. A wedge for coupling an ultrasonic signal from an ultrasonic transducer to a test object, the wedge comprising:

a test object interface wall configured for coupling the ultrasonic signal to the test object, a first plane extending normal to the test object interface wall;

a transducer interface wall configured for mounting the ultrasonic transducer to the wedge, the transducer interface wall is oriented such that a main ultrasonic signal transmitted from the ultrasonic transducer would form a first angle relative to the first plane and reflect a portion of the main ultrasonic signal at a reflected angle relative to the first plane, wherein the first angle is equal to the reflected angle; and

a reflecting wall oriented such that a second plane normal to the reflecting wall forms a second angle with the first plane, wherein the second angle is equal to the first angle, and wherein the reflected ultrasonic signal would be perpendicular to the reflecting wall.

2. The wedge of clause 1, wherein the reflecting wall is planar.

3. The wedge of any preceding clause, wherein the reflecting wall is curved.

4. The wedge of any preceding clause, further comprising:

a top wall, and

a first side wall,
wherein the first end of the transducer interface wall is proximate to the first end of the test object interface wall, the second end of the transducer interface wall is proximate to the first end of the top wall, the second end of the top wall is proximate to the first end of the reflecting wall, the second end of the reflecting wall is proximate to the first end of the side wall, and the second end of the side wall is proximate to the second end of the test object interface wall.

5. The wedge of any preceding clause, further comprising a second side wall opposite the first side wall, wherein the second side wall is between the transducer interface wall and the test object interface wall.

6. The wedge of any preceding clause, wherein the wedge comprises a plastic, wherein the speed of sound in the plastic is temperature dependent.

7. The wedge of any preceding clause, wherein the plastic is one of polyetherimide, polyamide-imide, polyimide, or polyetheretherketone.

8. A wedge for coupling an ultrasonic signal from an ultrasonic transducer to a test object, the wedge comprising:

a test object interface wall configured for coupling the ultrasonic signal to the test object, a first plane extending normal to the test object interface wall;

a transducer interface wall configured for mounting the ultrasonic transducer to the wedge, the transducer interface wall is oriented such that a main ultrasonic signal transmitted from the ultrasonic transducer would form a first angle relative to the first plane and reflect a portion of the main ultrasonic signal at a reflected angle relative to the first plane, wherein the first angle is equal to the reflected angle; and

a reflecting wall oriented such that a second plane normal to the reflecting wall forms a second angle with the first plane, wherein the second angle is equal to the first angle, and wherein the reflected ultrasonic signal would be perpendicular to the reflecting wall.

a top wall, and

a first side wall,

wherein the first end of the transducer interface wall is proximate to the first end of the test object interface wall, the second end of the transducer interface wall is proximate to the first end of the top wall, the second end of the top wall is proximate to the first end of the reflecting wall, the second end of the reflecting wall is proximate to the first end of the side wall, and the second end of the side wall is proximate to the second end of the test object interface wall.

9. The wedge of any preceding clause, wherein the reflecting wall is planar.

10. The wedge of any preceding clause, wherein the reflecting wall is curved.

11. The wedge of any preceding clause, further comprising a second side wall opposite the first side wall, wherein the second side wall is between the transducer interface wall and the test object interface wall.

12. The wedge of any preceding clause, wherein the wedge comprises a plastic, wherein the speed of sound in the plastic is temperature dependent.

13. The wedge of any preceding clause, wherein the plastic is one of polyetherimide, polyamide-imide, polyimide, or polyetheretherketone.

14. A method for determining the speed of sound in a wedge coupled to a test object, the method comprising the steps of:

transmitting a main ultrasonic signal from an ultrasonic transducer into the wedge;

reflecting a portion of the main ultrasonic signal back through the wedge to the ultrasonic transducer;

measuring a time of flight of the main ultrasonic signal and the reflected ultrasonic signal in the wedge; and

determining the speed of sound of the wedge based on the time of flight and the distance traveled by the main ultrasonic signal and the reflected ultrasonic signal in the wedge.

15. The method of any preceding clause, further comprising the step of determining the time of flight of the main ultrasonic signal in the wedge based on the speed of sound of the wedge and the distance traveled by the main ultrasonic signal in the wedge.

16. The method of any preceding clause, wherein
the step of transmitting comprises transmitting the main ultrasonic signal in a first direction on a first main ultrasonic path toward a test object interface wall of the wedge such that the first main ultrasonic path forms a first angle with a first plane normal to the test object interface wall; and
the step of reflecting comprises:

reflecting a portion of the main ultrasonic signal off of the test object interface wall in a second direction on a reflected ultrasonic path away from the test object interface wall such that the reflected ultrasonic path forms a reflected angle with the first plane normal to the test object interface wall, wherein the reflected angle is equal to the first angle;

further reflecting the reflected ultrasonic signal off of a reflecting wall of the wedge in a third direction on the reflected ultrasonic path toward the test object interface wall, wherein the third direction is opposite of the second direction; and

further reflecting the reflected ultrasonic signal off of the test object interface wall in a fourth direction on the first main ultrasonic path away from the test object interface wall toward the ultrasonic transducer, wherein the fourth direction is opposite of the first direction.

17. The method of any preceding clause, further comprising the step of determining the flow rate of a fluid flowing in the test object, wherein the flow rate is determined based on the speed of sound of the wedge.

**Claims**

1. A wedge (110) for coupling an ultrasonic signal from an ultrasonic transducer (130) to a test object, the wedge comprising:

   a test object interface wall (112) configured for coupling the ultrasonic signal to the test object, a first plane (191) extending normal to the test object interface wall (112);
   a transducer interface wall (102) configured for mounting the ultrasonic transducer (130) to the wedge (110), the transducer interface wall (102) is oriented such that a main ultrasonic signal transmitted from the ultrasonic transducer (130) would form a first angle relative to the first plane (191) and reflect a portion of the main ultrasonic signal at a reflected angle relative to the first plane (191), wherein the first angle is equal to the reflected angle; and
   a reflecting wall (120, 124) oriented such that a second plane (192) normal to the reflecting wall forms a second angle with the first plane (191), wherein the second angle is equal to the first angle, and wherein the reflected ultrasonic signal would be perpendicular to the reflecting wall (120, 124).

2. The wedge of claim 1, wherein the reflecting wall is planar (120), and/or the reflecting wall is curved (124).

3. The wedge of claim 1 or claim 2, further comprising:

   a top wall (106), and
   a first side wall (116),
   wherein the first end (101) of the transducer interface wall (102) is proximate to the first end (111) of the test object interface wall (112), the second end (103) of the transducer interface wall (102) is proximate to the first end (105) of the top wall (106), the second end (107) of the top wall (106) is proximate to the first end (119) of the reflecting wall (120), the second end (121) of the reflecting wall (120) is proximate to the first end (119) of the side wall (116), and the second end (117) of the side wall (116) is proximate to the second end (113) of the test object interface wall (112).

4. The wedge of claim 3, further comprising a second side wall (104) opposite the first side wall, wherein the second side wall is between the transducer interface wall (102) and the test object interface wall (112).

5. The wedge of any preceding claim, wherein the wedge (110) comprises a plastic, wherein the speed of sound in the plastic is temperature dependent.

6. The wedge of claim 5, wherein the plastic is one of polyetherimide, polyamide-imide, polyimide, or polyetheretherketone.

7. A method for determining the speed of sound in a wedge (110) coupled to a test object, the method comprising the steps of:

transmitting a main ultrasonic signal from an ultrasonic transducer (130) into the wedge (110);
reflecting a portion of the main ultrasonic signal back through the wedge (110) to the ultrasonic transducer (130);
measuring a time of flight of the main ultrasonic signal and the reflected ultrasonic signal in the wedge (110); and
determining the speed of sound of the wedge (110) based on the time of flight and the distance traveled by the main ultrasonic signal and the reflected ultrasonic signal in the wedge (110).

8. The method of claim 7, further comprising the step of determining the time of flight of the main ultrasonic signal in the wedge (110) based on the speed of sound of the wedge (110) and the distance traveled by the main ultrasonic signal in the wedge.

9. The method of claim 7 or claim 8, wherein
the step of transmitting comprises transmitting the main ultrasonic signal in a first direction on a first main ultrasonic path toward a test object interface wall (112) of the wedge (110) such that the first main ultrasonic path forms a first angle with a first plane (191) normal to the test object interface wall (112); and
the step of reflecting comprises:

reflecting a portion of the main ultrasonic signal off of the test object interface wall (112) in a second direction on a reflected ultrasonic path away from the test object interface wall such that the reflected ultrasonic path forms a reflected angle with the first plane (191) normal to the test object interface wall (112), wherein the reflected angle is equal to the first angle;
further reflecting the reflected ultrasonic signal off of a reflecting wall (120) of the wedge (110) in a third direction on the reflected ultrasonic path toward the test object interface wall (112), wherein the third direction is opposite of the second direction; and
further reflecting the reflected ultrasonic signal off of the test object interface wall (112) in a fourth direction on the first main ultrasonic path away from the test object interface wall (112) toward the ultrasonic transducer (130), wherein the fourth direction is opposite of the first direction.

10. The method of claim 7, 8 or 9, further comprising the step of determining the flow rate of a fluid flowing in the test object, wherein the flow rate is determined based on the speed of sound of the wedge (110).

FIG. 1

FIG. 2

300

```
┌─────────────────────────┐
│   Transmitting main     │
│ ultrasonic signal in wedge │────310
└─────────────────────────┘
            │
            ▼
┌─────────────────────────┐
│  Reflecting portion of main │
│  ultrasonic signal in wedge │────320
└─────────────────────────┘
            │
            ▼
┌─────────────────────────┐
│  Measuring time of flight in │
│          wedge          │────330
└─────────────────────────┘
            │
            ▼
┌─────────────────────────┐
│ Determining speed of sound │
│        of wedge         │────340
└─────────────────────────┘
            │
            ▼
┌─────────────────────────┐
│  Determining time of flight of │
│   main ultrasonic signal │────350
└─────────────────────────┘
```

FIG. 3

Europäisches
Patentamt

European
Patent Office

Office européen
des brevets

# EUROPEAN SEARCH REPORT

**Application Number**

EP 13 17 6806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 062913 A1 (FLOWTEC AG [CH]) 25 June 2009 (2009-06-25) * paragraphs [0012], [0013], [0018], [0020], [0042] - [0044], [0046] - [0048]; figures 1,4 * ----- | 1-9 | INV. G01F1/66 |
| X | US 5 280 728 A (SATO TOSHIO [JP] ET AL) 25 January 1994 (1994-01-25) * column 1, line 27 - column 6, line 25; figures 1,2,6,7 * ----- | 1,2,5, 7-10 | |

**TECHNICAL FIELDS SEARCHED (IPC)**

G01F

The present search report has been drawn up for all claims

| Place of search | Date of completion of the search | Examiner |
|---|---|---|
| Munich | 2 December 2013 | Papantoniou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 6806

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2013

| Patent document cited in search report | Publication date | Patent family member(s) | | Publication date |
|---|---|---|---|---|
| DE 102007062913 A1 | 25-06-2009 | NONE | | |
| US 5280728 A | 25-01-1994 | JP | 2747618 B2 | 06-05-1998 |
| | | JP | H04172222 A | 19-06-1992 |
| | | US | 5280728 A | 25-01-1994 |

EPO FORM P0459

For more details about this annex : see Official Journal of the European Patent Office, No. 12/82